# EUROPÄISCHE PATENTSCHRIFT

(11) **EP 4 434 414 B1**
(45) Veröffentlichungstag und Bekanntmachung des Hinweises auf die Patenterteilung: **26.11.2025**
(21) Anmeldenummer: 24162060.8
(22) Anmeldetag: 07.03.2024
(51) Int. Cl.: A47J 31/44

(54) **VERFAHREN ZUM BETRIEB EINER GETRÄNKEZUBEREITUNGSVORRICHTUNG, INSBESONDERE EINES KAFFEEVOLLAUTOMATEN MIT EINEM MEMBRAN-SCHAUMMODUL**
METHOD FOR OPERATING A BEVERAGE PREPARATION DEVICE, IN PARTICULAR A FULLY AUTOMATIC COFFEE MAKER WITH A MEMBRANE FOAM MODULE
PROCÉDÉ DE FONCTIONNEMENT D'UN DISPOSITIF DE PRÉPARATION DE BOISSONS, EN PARTICULIER D'UNE MACHINE À CAFÉ ENTIÈREMENT AUTOMATIQUE DOTÉE D'UN MODULE MOUSSE À MEMBRANE

(30) Priorität: 20.03.2023 DE 102023106901
(43) Veröffentlichungstag der Anmeldung: 25.09.2024
(73) Patentinhaber: Eugster/Frismag AG, 8580 Amriswil (CH)
(72) Erfinder: Wäger, Simon, 8580 Amriswil (CH); Frei, Nicolas, 9320 Arbon (CH); Sonderegger, Remo, 8274 Tägerwilen (CH); Schenk, Philipp, 8824 Schönenberg (CH)
(74) Vertreter: Patent- und Rechtsanwälte Behrmann Wagner PartG mbB

(56) Entgegenhaltungen:
- EP-A2- 2 036 472
- EP-B1- 1 472 963
- DE-A1- 102007 024 443
- US-A1- 2012 269 945
- LUIMES FERDINAND: "Handhabung niedriger Durchfl�sse - Teil 4", 26 November 2022 (2022-11-26), bronkhorst.com, pages 1 - 10, XP093178591, Retrieved from the Internet <URL:https://web.archive.org/web/20221126233713/https://www.bronkhorst.com/de-de/blogbeitrage/blogreihe-fluessigkeitszufuhr-mit-einer-pumpe/> [retrieved on 20240625]

## Beschreibung

Die vorliegende Erfindung betrifft ein Verfahren zum Betrieb einer Getränkezubereitungsvorrichtung, insbesondere eines Kaffeevollautomaten, nach dem Oberbegriff des Anspruchs 1.

Aus dem Stand der Technik sind Getränkezubereitungsvorrichtungen, insbesondere Kaffeevollautomaten, bekannt, die in der Lage sind, ein Getränkesubstrat, beispielsweise Kaffeebohnen oder Kaffeebohnenmehl, zu bevorraten und/oder herzustellen, beispielsweise durch Zermahlen von Kaffeebohnen, um unter Verwendung von Fluiden, insbesondere Wasser, aus dem Getränkesubstrat ein Getränk aufzubrühen oder auszulaugen und auszugeben. Dabei sind die bekannten Getränkezubereitungsvorrichtungen dazu eingerichtet, im Betrieb unterschiedliche Getränke herzustellen und auszugeben. Die unterschiedlichen Getränke können u.a. über verschiedene Parameter, beispielsweise Menge an Getränkesubstrat, Druck einer Vorverdichtung des Getränkesubstrats in einer Brühkammer, Brühkammerinnendruck beim Brühvorgang, Volumen an Brühfluid, Flussrate des Brühfluids, Temperatur des Brühfluids, Partikelgrößenverteilung (Mahlgrad) des Getränkesubstrats und viele mehr, beeinflusst werden. Dadurch erhält der Bediener oder Benutzer beim Betrieb einer entsprechenden Getränkezubereitungsvorrichtung die Möglichkeit, verschiedene und ggf. nach Bedienervorlieben personalisierte Getränke herzustellen und ausgeben zu lassen.

Bei bekannten Getränkezubereitungsvorrichtungen ist es zudem bereits hinlänglich bekannt, ein Schaummodul vorzusehen, um die hergestellten und ausgegebenen Getränke mit einem aufgeschäumten, bevorzugt proteinhaltigen, Fluid, insbesondere Milch oder Milchersatz, zu ergänzen oder zu verfeinern. Zur Vermeidung von unnötigen Wiederholungen soll für die nachfolgende Offenbarung unter dem Begriff Milch nicht nur klassische Milch tierischen Ursprungs, sondern auch eine Vielzahl von Milchersatzstoffen, beispielsweise auf pflanzlicher Basis, wie beispielsweise Mandelmilch oder Sojamilch, verstanden werden. Diese proteinhaltigen Fluide, die mit einem Schaummodul aufgeschäumt werden können, sollen nachfolgend zusammenfassend als Milch bezeichnet werden.

Bei den bekannten Getränkezubereitungsvorrichtungen, insbesondere Kaffeevollautomaten, arbeiten die integrierten Schaummodule in der Regel nach dem Prinzip einer Venturi-Düse oder einer Strahlpumpe, bei denen über ein Treibmedium, beispielsweise heißes Wasser oder Wasserdampf, das aufzuschäumende, bevorzugt proteinhaltige, Fluid angesaugt, aufgeschäumt und ebenfalls durch einen Fluidauslass der Getränkezubereitungsvorrichtung ausgegeben wird, um bevorzugt extern zu der Getränkezubereitungsvorrichtung einem Getränkebehälter zugeführt zu werden.

Das Treibmedium wird dabei regelmäßig auch als Wärmeträger genutzt, um das aufzuschäumende Fluid zu erwärmen.

Im Stand der Technik sind bereits unterschiedliche Ausgestaltungen von Schaummodulen bekannt. Beispielsweise sind einfache Venturi-Düsen und mehrere Venturi-Düsen - sowohl in Reihe geschaltet als auch parallel geschaltet - bekannt. Durch die unterschiedlichen Ausgestaltungen soll in möglichst vielfältiger Hinsicht auf den jeweils zu erzeugenden Schaum eingewirkt werden, um sowohl im Hinblick auf die Temperatur, den Luftgehalt, die Konsistenz, die Sämigkeit und dergleichen unterschiedliche Schäume zur Verfügung stellen zu können, wodurch die Bandbreite der mit der Getränkezubereitungsvorrichtung herstellbaren und ausgebbaren Getränke weiter erhöht wird.

Bei den bisher bekannten Schaummodulen sind insbesondere im Hinblick auf die Temperatur des Schaums, die Konsistenz des Schaums und den Luftgehalt des Schaums bestimmte Grenzen gesetzt. Bei dem Betrieb von Schaummodulen auf der Grundlage einer Venturi-Düse sind im Stand der Technik auch verschiedene Verfahren bekannt, um während oder zum Abschluss des Betriebs des Schaummoduls im Schaumbetrieb möglichst wenige Rückstände oder Ablagerungen des aufzuschäumenden Fluids zurückzulassen, um im Anschluss an den Schaumbetrieb der Getränkezubereitungsvorrichtung oder den Betrieb des Schaummoduls einen Spül- oder Reinigungsbetrieb möglichst effektiv und/oder ressourcenschonend durchführen zu können. Nichtsdestotrotz bleibt es auch bei bekannten Schaummodulen eine stetige Herausforderung, hygienisch bedenkliche Zustände durch Rückstände oder Ablagerungen des aufzuschäumenden, bevorzugt proteinhaltigen, Fluids zu verhindern.

Weiter ist zum Stand der Technik bereits die DE 10 2007 024 443 A1 bekannt. In dieser wird ein Verfahren zum Milchschäumen und eine dazugehörige Vorrichtung offenbart. Eine poröse Membran, die in der Druckschrift als Stromteiler bezeichnet wird, wird mit Druckluft beaufschlagt, um beim Austreten der Druckluft aus dem Stromteiler Milch in einer Milchkammer aufzuschäumen und somit Milchschaum zu generieren. In einer Ausführungsform ist eine Milchschaumdüse offenbart, welche einen Milcheingang und einen Lufteingang umfasst. Die Luft oder Druckluft strömt dabei von innen nach außen durch den Stromteiler und schäumt beim Austritt aus dem Stromteiler die Milch, welche am Außenumfang des Stromteilers entlang strömt, auf.

Die US 2012 / 269 945 A1 offenbart ein Verfahren und ein System zum Ausgeben eines geschäumten Produkts, beispielsweise eines geschäumten Milchprodukts. Das Dokument geht insbesondere auf Schlagsahne und auf das Aufschäumen von Schlagsahne ein.

Weiterhin zeigt die EP 1 472 963 B1 eine Einrichtung zur Ausgabe von warmer und/oder kalter Milch und/oder Milchschaum, welche eine einfache und optimale Reinigung ermöglichen soll.

Dementsprechend ist es die Aufgabe der vorliegenden Erfindung, ein Verfahren zum Betrieb einer Getränkezubereitungsvorrichtung, insbesondere eines Kaffeevollautomaten mit einem Schaummodul, vorzuschlagen, bei dem die Nachteile im Stand der Technik überwunden werden und insbesondere beim Betrieb des Schaummoduls ein Schaumbetrieb erreicht wird, der eine besonders große Bandbreite an hergestellten oder herstellbaren Schäumen ermöglicht und gleichzeitig die Reinigung des Schaummoduls und der mit dem Schaummodul zusammenwirkenden Bestandteile der Getränkezubereitungsvorrichtung im Anschluss an den Schaumbetrieb vereinfacht und/oder verbessert.

Diese Aufgabe wird mit einem Verfahren zum Betrieb einer Getränkezubereitungsvorrichtung mit den Merkmalen des Anspruchs 1 gelöst.

Vorteilhafte Ausführungsformen der Erfindung sind Gegenstand der nachfolgenden Beschreibung, der Figurenbeschreibung, der Figuren sowie der Unteransprüche.

Insgesamt sollen alle nachfolgend verfahrensmäßig offenbarten Merkmale auch als entsprechend vorrichtungsmäßig offenbart und beanspruchbar gelten, und umgekehrt.

Die oben genannte Aufgabe wird mit einem Verfahren zum Betrieb einer Getränkezubereitungsvorrichtung, insbesondere eines Kaffeevollautomaten, mit einem Schaummodul umfassend einen Schaumbetrieb dadurch gelöst, dass im Schaumbetrieb eine, bevorzugt poröse, Membran des Schaummoduls mit einem Treibfluid von einer ersten Membranoberfläche zu einer zweiten Membranoberfläche der Membran durchströmt wird und, bevorzugt gleichzeitig oder zumindest zeitlich überlappend, eine Fluidkammer, in der die zweite Membranoberfläche der Membran angeordnet ist, mit einem aufzuschäumenden, bevorzugt proteinhaltigen, Fluid, bevorzugt Milch, durchströmt wird, wobei das aufzuschäumende Fluid von einer Fluidpumpe, insbesondere einer Rollenpumpe, gefördert wird, die an einer Fluidzuleitung angreift, die einen Behälter, bevorzugt einen Milchbehälter, mit der Fluidkammer verbindet. Die besagte Fluidzuleitung zwischen Fluidkammer und Behälter, insbesondere Milchbehälter wird nachfolgend auch als Zuleitung bezeichnet werden.

Die vorliegende Erfindung basiert damit auf dem Grundgedanken, eine, bevorzugt poröse, Membran einzusetzen, und diese so in einer Fluidkammer anzuordnen oder in Wirkverbindung mit einer Fluidkammer zu betreiben, dass ein Fluid oder Treibfluid, beispielsweise Druckluft, im Schaumbetrieb des Schaummoduls von einer ersten Membranoberfläche der Membran auf eine zweite Membranoberfläche der Membran gefördert wird, wobei die zweite Membranoberfläche der Membran so gegenüber der Fluidkammer angeordnet ist, dass durch die Fluidkammer gefördertes, aufzuschäumendes, bevorzugt proteinhaltiges, Fluid, beispielsweise Milch, im Inneren der Fluidkammer die zweite Membranoberfläche der Membran passiert und dort austretendes Treibfluid in Form von kleinen Fluidblasen oder Gasblasen in das aufzuschäumende Fluid aufnimmt/inkorporiert und entsprechend ausgangsseitig, beispielsweise an einem Fluidauslass der Fluidkammer, in einem entsprechend aufgeschäumten Zustand ausgegeben wird.

Dies ermöglicht für den Betrieb der Getränkezubereitungsvorrichtung einen erheblichen Zugewinn an Möglichkeiten der Schaumherstellung, insbesondere im Hinblick auf die unterschiedlichen, oben bereits genannten Eigenschaften oder Charakteristika des jeweiligen Schaums. Besonders sei an dieser Stelle auf die Möglichkeit verwiesen, das aufzuschäumende Fluid ohne Erwärmung in einem "kalten" Zustand, beispielsweise zwischen 4°C und 20°C, aufzuschäumen. Gleichzeitig ermöglicht der Schaumbetrieb des Schaummoduls unter Durchströmen der Fluidkammer mit aufzuschäumendem Fluid und Durchströmen der Membran mit Treibfluid besonders vorteilhafte Möglichkeiten, um Reste oder Ablagerungen des aufzuschäumenden Fluids in der Fluidkammer und der entsprechenden Zuleitung zum Abschluss des Schaumbetriebs zu minimieren und/oder eine nachfolgende Reinigung zu vereinfachen/zu erleichtern. Die Erfindung hat in diesem Zusammenhang in überraschender Weise erkannt, dass durch die Abkehr von einem "klassischen" Konzept für das Schaummodul unter Verwendung einer Strahlpumpe oder Venturi-Düse zwar vorrichtungsseitig mitunter mehr Komponenten notwendig sein können, wie beispielsweise eine Förderpumpe für das aufzuschäumende Fluid und/oder eine weitere Pumpe zur Bereitstellung des Treibfluids, dass dadurch jedoch nicht nur die Bandbreite und Kombination von einzelnen Eigenschaften des jeweils hergestellten Schaums erheblich gesteigert wird, sondern dass dadurch auch in besonders vorteilhafter Weise die Reduzierung oder Vermeidung von Rückständen und Ablagerungen des aufzuschäumenden Fluids, insbesondere Milch, erreicht werden kann.

Beispielsweise die vorteilhafte Verwendung einer Rollenpumpe oder Schlauchquetschpumpe als Förderpumpe für das aufzuschäumende Fluid ermöglicht, dass die Zuleitung, durch die das aufzuschäumende Fluid gepumpt oder gefördert wird, vollständig, bevorzugt auch aus der Rollenpumpe oder Schlauchquetschpumpe, entfernt werden kann, um einem Reinigungsprozess zugeführt zu werden. Diese Entnahme kann derart einfach und sicher erfolgen, dass sie auch vom Bediener oder Benutzer der Getränkezubereitungsvorrichtung sicher und erfolgreich durchgeführt werden kann.

Auch in anderer Hinsicht, die im weiteren Verlauf der nachfolgenden Beschreibung noch anhand von vorteilhaften Ausführungsformen beschrieben werden wird, ermöglicht das erfindungsgemäße Verfahren in vorteilhafter Weise die Vermeidung oder Reduzierung von Rückstanden und/oder Ablagerungen des aufzuschäumenden Fluids.

In einer ersten vorteilhaften Ausgestaltung des Verfahrens kann vorgesehen sein, dass vor dem Abschluss des Schaumbetriebs eine Förderrichtung der Förderpumpe, bevorzugt Rollenpumpe, umgekehrt wird und restliches, insbesondere in der Fluidleitung zwischen dem Behälter und der Fluidkammer befindliches, aufzuschäumendes Fluid zurück in Richtung des Behälters gefördert wird. Dadurch wird ein besonderer Vorteil im Hinblick auf Rückstände und Ablagerungen erreicht, der wiederum auf den Umstand zurückgeht, dass bei der Abkehr von einem Venturi-Prinzip des Schaummoduls eine Förderpumpe für das aufzuschäumende Fluid wesentlich wird. Diese kann dann aber, besonders bevorzugt bei einer Ausgestaltung als Rollenpumpe oder Schlauchquetschpumpe, auch vorteilhaft genutzt werden, um aktiv und ggf. auch entgegen von vorherrschenden Kapillarkräften oder dergleichen in dem System, insbesondere zwischen dem Behälter und der Fluidkammer zurückbleibendes, aufzuschäumendes Fluid zu entfernen.

Dabei kann vorteilhaft vorgesehen sein, dass das zurückgeförderte Fluid, beispielsweise unter Verwendung einer entsprechenden Ventilanordnung, nicht in den Behälter, aus dem es entnommen wurde, zurückgeführt wird, sondern dass ein Ableiten in einen Auffangbehälter, beispielsweise eine Tropfschale, bewirkt wird. Alternativ kann auch eine Rückführung in den Behälter möglich sein, insbesondere wenn die hygienischen Zustände in der Zuleitung derart sicher sind, dass sichergestellt ist, dass mit dem zurückgeführten, aufzuschäumenden Fluid keine Verunreinigungen oder anderweitig hygienisch bedenklichen Stoffe oder Organismen in den Behälter eingebracht werden.

Die Umkehr der Förderrichtung der Förderpumpe kann beispielsweise gegen Ende des Schaumbetriebs des Schaummoduls erfolgen, beispielsweise noch bevor die Zuleitung mit einem Spülfluid beaufschlagt wird (vgl.: Ausführungsform weiter unten). Alternativ, insbesondere wenn eine Ableitung des Inhalts der Zuleitung in einen Auffangbehälter, beispielsweise eine Tropfschale, erfolgt, kann die Umkehr der Förderrichtung der Förderpumpe auch vorteilhaft stattfinden, nachdem bereits Spülfluid durch die Zuleitung zugeführt wurde, sodass dann verdünntes, restliches aufzuschäumendes Fluid und/oder Spülfluid zurück in Richtung des Behälters und/oder Auffangbehälters gefördert wird.

Erfindungsgemäß ist vorgesehen, dass vor dem Abschluss des Schaumbetriebs die Zuleitung mit Treibfluid beaufschlagt wird, und die Zuleitung belüftet wird. Dadurch können zusätzlich oder alternativ zur Umkehr der Förderrichtung der Förderpumpe in vorteilhafter Weise Reste des aufzuschäumenden Fluids aus der Zuleitung entfernt werden, um Verschmutzungen und/oder Ablagerungen zu vermeiden.

Das Treibfluid kann dabei bevorzugt über die Fluidkammer und einen entsprechenden Auslass der Fluidkammer zu einem Auslass des Schaummoduls abgeführt werden. Dies kann ggf. auch vorgenommen werden, nachdem die Zuleitung mit Spülfluid beaufschlagt wurde und/oder die Förderrichtung der Förderpumpe umgekehrt wurde. Vorteilhaft kann die zur Verfügungstellung des Treibfluids über eine Verzweigung in der Zuleitung erfolgen, die bevorzugt möglichst nah oder möglichst direkt hinter dem Ausgang der Förderpumpe realisiert ist und zumindest mittelbar, besonders bevorzugt über ein Mehrwege-Ventil, mit einer Pumpe zur Bereitstellung des Treibfluids verbindbar ist.

In einer weiteren, besonders bevorzugten Variante des Verfahrens kann vorgesehen sein, dass, wie oben bereits angedeutet, vor dem Abschluss des Schaumbetriebs die Zuleitung mit Spülfluid beaufschlagt wird, wobei bevorzugt das Spülfluid mit einer Frischwasserpumpe durch die Zuleitung und die Fluidkammer gefördert wird. Besonders vorteilhaft wird die Menge an Spülfluid dabei so gering gewählt, dass die Abgabe des Spülfluids in das erzeugte und mit dem Schaum verfeinerte Getränk erfolgen kann, ohne dass das Vorhandensein des Spülfluids, beispielsweise Leitungswasser, dem Benutzer auffällt und/oder die Eigenschaften des erzeugten und abgegebenen Schaums merklich verändert. Gegebenenfalls und entsprechend vorteilhaft kann dabei das durch die Fluidkammer geförderte Spülfluid durch weiterhin über die Membran zur Verfügung gestellte Fluidströme des Treibfluids in ein Aerosol zerstäubt werden, sodass dieses evtl. noch nicht einmal vollständig in das hergestellte Getränk oder den abgegebenen Schaum eingebracht wird.

In einer weiteren, besonders vorteilhaften Variante des Verfahrens kann außerdem vorgesehen sein, dass das Treibfluid über eine Pumpe, bevorzugt eine Luftpumpe, bereitgestellt wird und die Steuerung der Pumpe über einen Regelkreis erfolgt, in dem ein Fluidflussnmesser, insbesondere ein Luftflussmesser, den Fluidfluss des bereitgestellten Treibfluids misst und die Pumpe abhängig von einer vordefinierten Sollfluidfluss und dem mit dem Fluidflussnmesser ermittelten Fluidfluss gesteuert wird. Dadurch werden verschiedene Vorteile erreicht. Einerseits kann dadurch eine konsistente und wiederholbare Erzeugung und Ausgabe von Schaum ermöglicht werden, selbst wenn es auf Seiten der Pumpe zu veränderten Bedingungen kommt. Die veränderten Bedingungen auf Seiten der Pumpe können einerseits intrinsisch sein, beispielsweise wenn die Pumpe selbst - beispielsweise durch normale Abnutzung oder Verschleiß - ihre Pumpencharakteristik verändert. Die Bedingungen können auch extrinsisch verändert sein, beispielsweise wenn ein Filter oder Vorfilter vor der Pumpe eine veränderte Bereitstellung oder Bereitstellungsumgebung des Treibfluids, insbesondere der Luft, verursacht.

Gemäß einer weiteren, besonders wünschenswerten Variante des Verfahrens kann zudem vorgesehen sein, dass das Treibfluid über eine Pumpe, bevorzugt eine Luftpumpe, bereitgestellt wird und die Pumpe abhängig von dem herzustellenden Schaum angesteuert wird. Dadurch kann in vorteilhafter Weise für das jeweils mit der Getränkezubereitungsvorrichtung herzustellende Getränk und den dabei herzustellenden Schaum eine unterschiedliche, beispielsweise getränkeabhängige, Steuerung der Pumpe erreicht werden.

Gemäß einer weiteren, besonders bevorzugten Ausgestaltung des Verfahrens kann vorgesehen sein, dass die Pumpe während des Schaumbetriebs zur Bereitstellung eines Treibfluidprofils mit einem über die Zeit variablen, vorgegebenen Sollfluss an Treibfluid angesteuert wird. Dadurch kann in besonders vorteilhafter Weise, beispielsweise über eine Steuerung einer Versorgungsspannung der Pumpe, auch eine Variation der Charakteristika des Schaums während ein und desselben Betriebs des Schaummoduls oder Schaumbetriebs erreicht werden. So kann beispielsweise zunächst ein Schaum erzeugt werden, in dem weniger Treibfluid, insbesondere Luft, aufgenommen wurde und gegen Ende des Schaumbetriebs ein Schaum hergestellt werden, in dem mehr oder deutlich mehr Treibfluid, insbesondere Luft, aufgenommen wurde. Auch andere Charakteristika lassen sich, zumindest mittelbar, über die zeitliche Variation des Treibfluids beeinflussen.

In einer weiteren, besonders vorteilhaften Ausgestaltung des Verfahrens kann weiterhin vorgesehen sein, dass die Förderpumpe, bevorzugt Rollenpumpe, abhängig von dem herzustellenden Schaum angesteuert wird. Dies kann beispielsweise durch eine unterschiedliche Versorgungsspannung der Förderpumpe realisiert werden. Damit kann für unterschiedliche Schäume und/oder unterschiedlich herzustellende Getränke mit Schaum eine unterschiedliche Menge und ein unterschiedlicher Volumenfluss von aufzuschäumendem Fluid, insbesondere Milch, erreicht werden. Vorteilhaft kann für einen bestimmten Schaum oder ein bestimmtes herzustellendes Getränk ein entsprechender Wert und/oder ein entsprechendes Profil in der Getränkezubereitungsvorrichtung hinterlegt und/oder gespeichert sein. Dabei kann vorgesehen sein, dass die Werte direkt oder mittelbar durch den Benutzer oder Bediener durch entsprechende Eingaben an der Getränkezubereitungsvorrichtung veränderbar oder einstellbar sind. Dies gilt auch für die oben beschriebenen Flüsse/Mengen und Profile des Treibfluids.

Im Schaumbetrieb der Getränkezubereitungsvorrichtung und/oder des Schaummoduls der Getränkezubereitungsvorrichtung kann zudem vorgesehen sein, dass abhängig vom Getränk/Schaum und/oder variabel während des Betriebs des Schaummoduls über die Zeit ein Spaltabstand zwischen der zweiten Membranoberfläche der Membran und einer gegenüberliegenden Oberfläche der Fluidkammer variiert wird. Auch dadurch lassen sich in besonders vorteilhafter Weise Eigenschaften des Schaums über die Durchflussrate des aufzuschäumenden Fluids durch die Fluidkammer beeinflussen.

In einer weiteren, besonders vorteilhaften Ausführungsform kann vorgesehen sein, dass während des Schaumbetriebs das aufzuschäumende Fluid stromabwärts von der Förderpumpe mit einer Erwärmungsvorrichtung, bevorzugt anhand eines vorgegebenen Erwärmungsprofils, erwärmt wird. Dier Erwärmung kann konstant oder über die Zeit variabel erfolgen. Die Erwärmung kann, besonders wenn sie über eine Zuleitung von Dampf, bevorzugt Wasserdampf erfolgt, nicht nur die Wärme oder Temperatur des aufzuschäumenden Fluids beeinflussen, sondern auch die Feuchtigkeit oder den Wassergehalt des Schaums beeinflussen. Auch damit können die Schaumeigenschaften statisch oder dynamisch beeinfluss werden und in erheblichem Maße individuelle Schäume mit variablen Schaumeigenschaften in unterschiedlichen Bereichen des Schaums hergestellt werden.

Somit wird durch die vorangehenden Ausführungsformen eine besonders große Bandbreite an Schaumprofilen ermöglicht, die nicht nur unterschiedliche Schäume bei unterschiedlichen Bezügen oder Schaumbetrieben ermöglichen, sondern auch innerhalb eines Schaumbetriebs oder Schaumbezugs eine Ausgabe eines Schaums mit variierenden Eigenschaften erlauben.

Gemäß einer weiteren, besonders vorteilhaften Ausführungsform des Verfahrens kann zudem vorgesehen sein, dass die Menge und/oder Masse an bereitgestelltem, aufzuschäumendem Fluid, bevorzugt Milch, über eine Wägezelle ermittelt wird, die in Wirkverbindung mit dem Behälter steht und/oder das Gewicht des Behälters erfasst.

Nachfolgend werden vorteilhafte Ausführungsformen des erfindungsgemäßen Verfahrens anhand von Ausführungsbeispiele zeigenden, rein schematischen Zeichnungen erläutert.

Darin zeigen:
- Fig. 1:: ein grundsätzliches Fluidschema einer Getränkezubereitungsvorrichtung zum Betrieb mit dem erfindungsgemäßen Verfahren;
- Fig. 2:: ein beispielhaftes Fluidschema einer Getränkezubereitungsvorrichtung zur Erläuterung eines erfindungsgemäßen Schaumbetriebs.

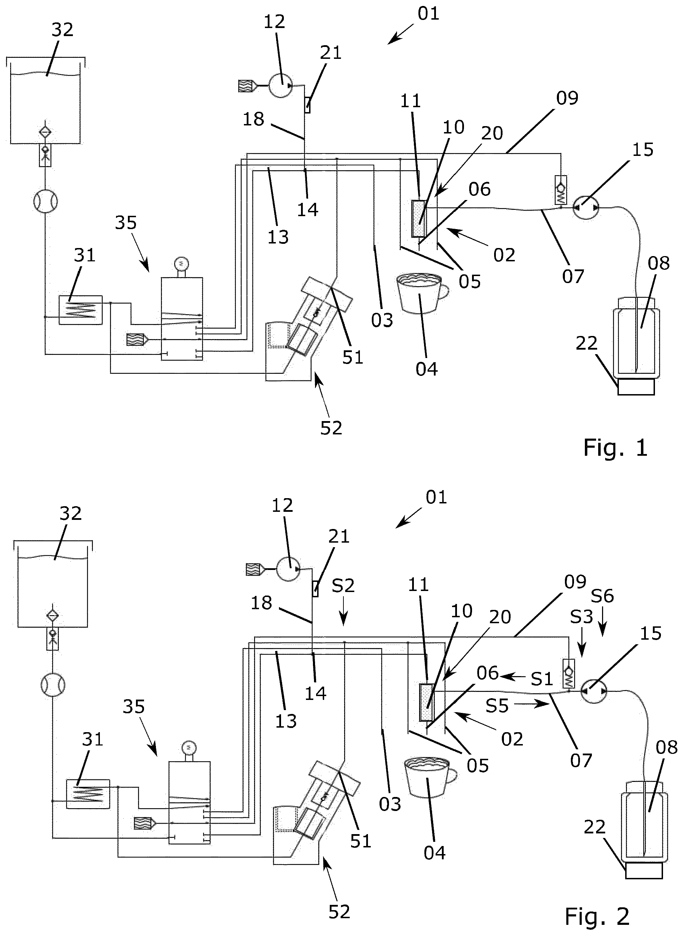

Fig. 1 zeigt ein beispielhaftes, grundlegendes Fluidschema einer Getränkezubereitungsvorrichtung zur Ausführung des erfindungsgemäßen Verfahrens. Bei einer gattungsgemäßen Getränkezubereitungsvorrichtung besteht oftmals die Möglichkeit zur Ausgabe von erhitztem Wasser über einen Heißwasserauslauf 03, der fluidtechnisch mit einem Heißwasserbereiter 31, beispielsweise einem Thermoblock, verbunden ist, der wiederum über einen Frischwasseranschluss der Getränkezubereitungsvorrichtung oder einem Frischwassertank 32 der Getränkezubereitungsvorrichtung fluidtechnisch angeschlossen sein kann oder gespeist wird.

Über den Heißwasserauslauf kann heißes Wasser in einen unter dem Ausgabemodul 02 angeordneten Getränkebehälter ausgegeben werden. Über ein Mehrwege-Ventil 35 kann durch die jeweilige Beschaltung oder Stellung des Mehrwege-Ventils 35 das im Frischwassertank 32 bevorratete Wasser in einem erwärmten Zustand, nach Passieren des Heißwasserbereiters 31, oder in einem unerwärmten Zustand neben dem Heißwasserauslauf 03 auch an verschiedene andere Leitungen oder fluidtechnische Verbindungen der Getränkezubereitungsvorrichtung 01 ausgegeben oder abgegeben werden. So kann beispielsweise erwärmtes Wasser genutzt werden, um aufzuschäumendes Fluid, insbesondere Milch, zu erwärmen. Gleichzeitig kann das im Frischwassertank 32 bevorratete Wasser genutzt werden, um als Spülfluid eingesetzt zu werden.

Das Mehrwege-Ventil 35 kann auch weitere Fluidverbindungen der Getränkezubereitungsvorrichtung 01 flexibel öffnen/schließen und/oder verbinden/trennen, wie nachfolgend noch beschrieben werden wird.

Die Getränkezubereitungsvorrichtung 01 umfasst zwei Brühkammerausläufe 05, die fluidtechnisch mit dem Ausgang 51 oder Auslauf einer Brühkammereinheit 52 verbunden sind, in der ein Getränk, beispielsweise eine Kaffeespezialität, aus heißem oder kaltem Wasser und Getränkesubstrat, beispielsweise Kaffeebohnenmehl, aufgebrüht oder ausgelaugt wird. Über die Brühkammerausläufe 05 kann ebenfalls ein entsprechendes Getränk in den Getränkebehälter 04 ausgegeben werden.

Weiterhin umfasst das Ausgabemodul 02 einen Milch- und/oder Schaumauslauf 06. Der Milch- und/oder Schaumauslauf 06 ist beispielsweise über eine trennbare Zuleitung 07 mit einem Behälter 08, insbesondere einem Milchbehälter, verbunden, wobei in die Zuleitung 07 eine weitere Hilfszuleitung 09 münden kann. Die Hilfszuleitung 09 mündet besonders vorteilhaft direkt oder unmittelbar hinter dem Ausgang einer Förderpumpe 15 in die Zuleitung 07. Die Hilfszuleitung 09 kann für verschiedene Zwecke genutzt werden. Einerseits kann über die Hilfszuleitung 09 Treibfluid und/oder Spülfluid bereitgestellt werden, um zum Abschluss oder vor dem Abschluss des Schaumbetriebs die Zuleitung 07 zu reinigen und/oder zu entlüften. Während des Schaumbetriebs kann die Hilfszuleitung 09 auch genutzt werden, um heißes Wasser oder Wasserdampf in die Zuleitung 07 zu fördern, um dadurch das aufzuschäumende Fluid, insbesondere die Milch, zu erwärmen. Damit dient dann die Hilfszuleitung als Erwärmungsvorrichtung. Die Erwärmungsvorrichtung kann alternativ auch über eine Wärmetauschvorrichtung realisiert werden, die dann vorteilhaft zwar in Wirkverbindung mit der Zuleitung 07 steht, aber keine Verdünnung oder Vermischung des aufzuschäumenden Fluids mit dem Wärmeträger verursacht.

Im Schaumbetrieb der Getränkezubereitungsvorrichtung 01 zur Herstellung und Ausgabe eines aufgeschäumten Fluids, insbesondere Milch, wird zusätzlich zu der vorangehend bereits genannten Einspeisung von Heißwasser oder Dampf in die Zuleitung 07 über die Hilfszuleitung 09 das aufzuschäumende Fluid, insbesondere die Milch, von der Förderpumpe 15, die bevorzugt als Rollenpumpe oder Schlauchquetschpumpe ausgebildet ist, aus dem Behälter 08 in die Zuleitung 07 gefördert. Am Ende der Zuleitung 07 wird das aufzuschäumende Fluid in die Fluidkammer überführt. Im Inneren der Fluidkammer ist eine Membran 10 so angeordnet, dass das aufzuschäumende Fluid im Inneren der Fluidkammer mit Treibfluid versetzt wird, welches über einen Fluidanschluss 11 der Membran zur Verfügung gestellt wird und von einer ersten Membranoberfläche der Membran zu einer zweiten Membranoberfläche der Membran 10 strömt. Die Membran 10 kann dabei vorteilhaft als entsprechend poröser Körper, beispielsweise metallischer Sinterkörper, ausgebildet sein, sodass eine Vielzahl an einzelnen Fluidströmen des Treibfluids ausgebildet werden, die an der zweiten Membranoberfläche der Membran 10 von dem durch die Fluidkammer strömenden, aufzuschäumenden Fluid, insbesondere Milch, abgerissen und in die Milch aufgenommen werden. Durch die aufgenommenen Fluidblasen, insbesondere Luftblasen, wird die Aufschäumung des Fluids, insbesondere der Milch, erreicht.

Der Fluidanschluss 11 kann vorteilhaft fluidtechnisch mit einer Pumpe 12, bevorzugt einer Luftpumpe, verbunden sein, welche Umgebungsluft ansaugt, komprimiert und über eine Leitung 13 dem Fluidanschluss 11 zur Verfügung stellt. Dadurch, dass das Treibfluid, unabhängig von einem Fluid zur Erwärmung der Milch, verwendet wird oder verwendet werden kann, kann über die erfindungsgemäße Vorrichtung oder das erfindungsgemäße Verfahren eine Herstellung von "kaltem" Schaum erreicht werden, der beispielsweis eine Temperatur von 4°C bis 24°C aufweist, abhängig von der Temperatur der verwendeten Milch.

Die Membran 10 kann beispielsweise als Sinterkörper aus metallischem Werkstoff, bevorzugt mit einer entsprechend definierten Porosität, ausgestaltet sein, sodass beim Durchströmen des Treibfluids, insbesondere der Luft oder Druckluft, von einer ersten Membranoberfläche der Membran 10 zu einer zweiten Membranoberfläche der Membran 10 an der zweiten Membranoberfläche entsprechend viele kleine Fluidströme erzeugt werden. Die Membran 10 kann beispielsweise die Form eines Kegelstumpfes aufweisen, in dessen Inneren eine erste Membranoberfläche der Membran 10 ausgebildet ist. Es sind aber auch andere Formen der Membran möglich, beispielsweise eine Konus-Form oder eine Zylinderform. Die Membran grenzt mit einer ersten Membranoberfläche an ein Volumen an, welches genutzt wird das Treibfluid auf einen möglichst großen Teil der Membran, besonders der ersten Membranoberfläche zu verteilen. Das Volumen kann als Innenvolumen von der Membran (teilweise) umschlossen sein. Zwischen der Pumpe 12 und dem Fluideinlass 11 kann eine Kreuzung 14 mit einer ebenfalls am Fluideinlass endenden Zuleitung 18 vorgesehen sein, die beispielsweise kaltes Wasser oder erhitztes/erwärmtes Wasser aus dem Frischwassertank 32 zum Fluideinlass und damit zur ersten Membranoberfläche der Membran fördert. Dies kann in einem nicht näher beschriebenen Spül- oder Reinigungsbetrieb der Getränkezubereitungsvorrichtung, insbesondere der Membran 10, genutzt werden. Über das Mehrwege-Ventil 35 kann zudem erreicht werden, dass Luft oder Druckluft von der Pumpe 12 in die Hilfszuleitung 09 und von dort aus in die Zuleitung 07 gelangt, wie vorangehend bereits beschrieben.

In der Fig. 2 ist beispielhaft mit einem entsprechenden Verweis auf die jeweiligen Komponenten oder genutzten Leitungen der Getränkezubereitungsvorrichtung 01 ein beispielhafter, erfindungsgemäßer Ablauf eines Schaumbetriebs skizziert.

In einem ersten Verfahrensschritt S₁ kann beispielsweise die Förderpumpe 15 aktiviert werden. Die Förderpumpe 15 kann gemäß einer Vorgabe, beispielsweise einem definierten Förderfluss pro Zeiteinheit und/oder gemäß einer vordefinierten Förderspannung der Förderpumpe 15 angesteuert werden. Diese Ansteuerung kann über die Zeit während des Betriebs der Förderpumpe 15 variiert werden, beispielsweise um ein variables Förderprofil zu realisieren. Die Förderpumpe 15 wird dabei zunächst so angesteuert, dass eine Förderrichtung entsteht, mit der Milch aus einem Behälter 08, insbesondere Milchbehälter, in die Zuleitung 07 und von dort aus in die Fluidkammer gefördert wird, an deren Ausgang oder Auslass ein Schaum, insbesondere ein Milchschaum, ausgegeben oder abgegeben wird.

Im Schaumbetrieb kann in einem Verfahrensschritt S₂ gleichzeitig zur Initiierung oder zur Inbetriebnahme der Förderpumpe 15 auch die Pumpe 12 in Betrieb genommen oder gestartet werden, mit der das Treibfluid, insbesondere Luft oder Druckluft, an den Fluideinlass 11 gefördert wird, von wo aus das Treibfluid über die erste Membranoberfläche der Membran 10 zu einer zweiten Membranoberfläche der Membran 10 gelangen kann und an der zweiten Membranoberfläche der Membran 10 mit dem durch die Fluidkammer geförderten, aufzuschäumenden Fluid in Kontakt kommt und dieses aufschäumt. Die Ansteuerung der Pumpe 12 kann, beispielsweise über eine entsprechende Versorgungsspannung, ebenfalls vom jeweils herzustellenden Schaum abhängig sein und auch zeitlich variabel erfolgen. Weiterhin kann vorgesehen sein, dass ein Fluidflussmesser 21, beispielsweise in Form eines Luftflussmessers, der Fluidfluss des bereitgestellten Treibfluids misst und die Pumpe 12 in Abhängigkeit von einem vordefinierten Sollfluidfluss und der mit dem Fluidflussmesser ermittelten Fluidfluss im Sinne eines Regelkreises der Pumpe 12 steuert.

In ähnlicher Weise kann der Behälter 08 mit einer Wägezelle 22 in Wirkverbindung stehen, wobei die Menge und/oder die Masse an bereitgestelltem oder abgegebenem, aufzuschäumendem Fluid über die Wägezelle 22 ermittelt wird. Auch die Steuerung oder Ansteuerung der Förderpumpe 15 kann über einen entsprechenden Regelkreis verfügen, der die Ansteuerung der Förderpumpe von den Messwerten der Wägezelle abhängig macht, um eine vorgegebene statische oder über die Zeit variable Menge/Masse an aufzuschäumendem Fluid bereitzustellen oder zu fördern.

Der Verfahrensschritt S₂, der die Bereitstellung des Treibfluids am Fluideinlass und damit an der Membran bewirkt, kann zeitlich leicht versetzt, insbesondere kurz nach der Initiierung oder Aktivierung der Förderpumpe 15 erfolgen.

In einem weiteren Verfahrensschritt S₃, der beispielsweise parallel mit dem Verfahrensschritt S₁ oder S₂ eingeleitet wird oder initiiert wird, kann heißes Wasser oder Wasserdampf über die Hilfszuleitung 09 in die Zuleitung 07 gefördert werden, um dort eine Erwärmung der Milch oder des aufzuschäumenden Fluids zu bewirken. Der Verfahrensschritt S₃ kann entfallen, insbesondere wenn ein "kalter" Schaum erzeugt und ausgegeben werden soll.

Nach einer gewissen Zeit und/oder einer entsprechenden Menge/Masse von abgegebener und/oder aufgeschäumter Milch kann in einem weiteren Verfahrensschritt S₄ der Antrieb oder der Betrieb der Förderpumpe gestoppt werden. In einem vorteilhaften Verfahrensschritt S₅ wird dann die Förderrichtung der Förderpumpe 15 umgekehrt und restliches, aufzuschäumendes Fluid in der Zuleitung 07 zurück in Richtung des Behälters 08 gefördert.

Bereits vor oder nach der Umkehr der Förderrichtung der Förderpumpe 15 kann in einem weiteren Verfahrensschritt S₆ vorteilhaft über die Hilfsleitung 09 zunächst eine geringe Menge Spülfluid, beispielsweise kaltes Wasser, in die Zuleitung 07 und/oder eine geringe Menge Treibfluid in die Zuleitung 07 gefördert werden. Dadurch kann bereits zum Abschluss des Schaumbetriebs und ggf. zusätzlich oder alternativ zur Umkehr der Förderrichtung der Förderpumpe 15 Reste von aufzuschäumendem Fluid, insbesondere Milch, aus der Zuleitung 07 und der Fluidkammer entfernt werden, um Rückständen und Ablagerungen vorzubeugen/entgegenzuwirken.

### Bezugszeichenliste

- 01: Getränkezubereitungsvorrichtung
- 02: Ausgabemodul
- 03: Heißwasserauslauf
- 04: Getränkebehälter
- 05: Brühkammerauslauf
- 06: Milch- oder Schaumauslauf
- 07: Zuleitung
- 08: Behälter
- 09: Hilfszuleitung
- 10: Membran
- 11: Fluidanschluss/Fluideinlass
- 12: Pumpe
- 13: Leitung
- 14: Kreuzung
- 15: Förderpumpe
- 18: Zuleitung
- 20: Schaummodul
- 21: Fluidflussmesser
- 22: Wägezelle
- 31: Heißwasserbereiter
- 32: Frischwassertank
- 35: Mehrwege-Ventil
- 51: Ausgang
- 52: Brühkammereinheit
- S₁: erster Verfahrensschritt
- S₂: zweiter Verfahrensschritt
- S₃: dritter Verfahrensschritt
- S₄: vierter Verfahrensschritt
- S₅: fünfter Verfahrensschritt
- S₆: sechster Verfahrensschritt

## Patentansprüche

1. Verfahren zum Betrieb einer Getränkezubereitungsvorrichtung (01), insbesondere eines Kaffeevollautomaten, mit einem Schaummodul (20) umfassend einen Schaumbetrieb, wobei der Schaumbetrieb die folgenden Verfahrensschritte umfasst:
- Durchströmen einer, bevorzugt porösen, Membran (10), des Schaummoduls (20) mit einem Treibfluid von einer ersten Membranoberfläche zu einer zweiten Membranoberfläche der Membran (10);
- Durchströmen von einer Fluidkammer, in der die zweite Membranoberfläche der Membran (10) angeordnet ist, mit einem aufzuschäumenden, bevorzugt proteinhaltigen, Fluid, wobei das aufzuschäumende Fluid von einer Förderpumpe (15), insbesondere einer Rollenpumpe, gefördert wird, die an einer Zuleitung (07) angreift, die einen Behälter (08), bevorzugt Milchbehälter, mit der Fluidkammer verbindet
**dadurch gekennzeichnet,**
**dass** vor dem Abschluss des Schaumbetriebs die Zuleitung (07) mit dem Treibfluid beaufschlagt wird und die Zuleitung (07) belüftet wird.

2. Verfahren nach Anspruch 1,
**dadurch gekennzeichnet,**
**dass** vor dem Abschluss des Schaumbetriebs eine Förderrichtung der Förderpumpe (15), bevorzugt der Rollenpumpe, umgekehrt wird und restliches, aufzuschäumendes Fluid zurück in Richtung des Behälters (08) gefördert wird.

3. Verfahren nach einem der vorangehenden Ansprüche,
**dadurch gekennzeichnet,**
**dass** das vor dem Abschluss des Schaumbetriebs die Zuleitung (07) mit Spülfluid beaufschlagt wird, wobei bevorzugt das Spülfluid mit einer Frischwasserpumpe durch die Zuleitung (07) und die Fluidkammer gefördert wird.

4. Verfahren nach einem der vorangehenden Ansprüche,
**dadurch gekennzeichnet,**
**dass** das Treibfluid über eine Pumpe (12), bevorzugt eine Luftpumpe, bereitgestellt wird und die Pumpe (12) abhängig von dem herzustellenden Schaum angesteuert wird.

5. Verfahren nach einem der vorangehenden Ansprüche,
**dadurch gekennzeichnet,**
**dass** das Triebfluid über eine Pumpe (12), bevorzugt eine Luftpumpe, bereitgestellt wird und die Steuerung der Pumpe über einen Regelkreis erfolgt, indem eine Fluidflussmesser (21), insbesondere Luftflussmesser, den Fluidfluss des bereitgestellten Treibfluids misst und die Pumpe (12) abhängig von einem vordefinierten Sollfluidfluss und dem mit dem Fluidflussmesser (21) ermittelten Fluidfluss gesteuert wird.

6. Verfahren nach Anspruch 4 oder **5,**
**dadurch gekennzeichnet,**
**dass** die Pumpe (12) während des Schaumbetriebs zur Bereitstellung eines Treibfluidprofils mit einem über die Zeit variablen, vorgegebene Sollfluss an Treibfluid angesteuert wird.

7. Verfahren nach einem der vorangehenden Ansprüche,
**dadurch gekennzeichnet,**
**dass** die Förderpumpe (15), bevorzugt Rollenpumpe, abhängig von dem herzustellenden Schaum angesteuert wird.

8. Verfahren nach Anspruch 7,
**dadurch gekennzeichnet,**
**dass** die Förderpumpe (15), bevorzugt Rollenpumpe, während des Schaumbetriebs zur Bereitstellung eines Fluidprofils, bevorzugt Milchprofil, mit einem über die Zeit variablen, vorgegebenen Sollfluss an aufzuschäumendem Fluid, insbesondere Milch, angesteuert wird.

9. Verfahren nach einem der vorangehenden Ansprüche,
**dadurch gekennzeichnet,**
**dass** während des Schaumbetriebs das aufzuschäumende Fluid stromabwärts von der Förderpumpe (15) mit einer Erwärmungsvorrichtung, bevorzugt anhand eines vorgegebenen Erwärmungsprofils, erwärmt wird,

10. Verfahren nach einem der vorangehenden Ansprüche,
**dadurch gekennzeichnet,**
**dass** die Menge und/oder Masse an bereitgestelltem, aufzuschäumendem Fluid, bevorzugt Milch, über eine Wägezelle (22) ermittelt wird, die in Wirkverbindung mit dem Behälter (08) steht und/oder das Gewicht des Behälters (08) erfasst.

## Claims

1. A method for operating a beverage preparation device (01), in particular a fully automatic coffee machine, with a foam module (20) comprising a foam mode, the foam mode comprising the following method steps:
- making a driving fluid flow through a preferably porous membrane (10) of the foam module (20) from a first membrane surface to a second membrane surface of the membrane (10);
- making a fluid to be foamed, which preferably contains proteins, flow through a fluid chamber in which the second membrane surface of the membrane (10) is disposed, the fluid to be foamed being fed by a feed pump (15), in particular a roller pump, connected to a feed line (07) connecting a tank (08), preferably a milk tank, to the fluid chamber,
**characterized in that**
prior to the end of the foam mode, the feed line (07) is subjected to the driving fluid and the feed line (07) is vented.

2. The method according to claim 1,
**characterized in that**
prior to the end of the foam mode, a feeding direction of the feed pump (15), preferably the roller pump, is reversed and residual fluid to be foamed is fed back in the direction of the tank (08).

3. The method according to any one of the preceding claims,
**characterized in that**
prior to the end of the foam mode, the feed line (07) is subjected to purging fluid, the purging fluid preferably being fed through the feed line (07) and the fluid chamber by means of a make-up water pump.

4. The method according to any one of the preceding claims,
**characterized in that**
the driving fluid is provided via a pump (12), preferably an air pump, and the pump (12) is actuated as a function of the foam to be produced.

5. The method according to any one of the preceding claims,
**characterized in that**
the driving fluid is provided via a pump (12), preferably an air pump, and the pump is controlled via a control loop by metering the fluid flow of the provided driving fluid by means of a fluid flow meter (21), in particular an air flow meter, and controlling the pump (12) as a function of a predefined target fluid flow and the fluid flow determined by means of the fluid flow meter (21).

6. The method according to claim 4 or 5,
**characterized in that**
in foam mode, the pump (12) is actuated with a predetermined target driving-fluid flow which is variable over time so as to provide a driving-fluid profile.

7. The method according to any one of the preceding claims,
**characterized in that**
the feed pump (15), preferably the roller pump, is actuated as a function of the foam to be produced.

8. The method according to claim 7,
**characterized in that**
in foam mode, the feed pump (15), preferably the roller pump, is actuated with a predetermined target flow of fluid, in particular milk, to be foamed which is variable over time so as to provide a fluid profile, preferably a milk profile.

9. The method according to any one of the preceding claims,
**characterized in that**
in foam mode, the fluid to be foamed is heated, preferably according to a predetermined heating profile, by means of a heating device downstream of the feed pump (15).

10. The method according to any one of the preceding claims,
**characterized in that**
the amount and/or mass of provided fluid, preferably milk, to be foamed is determined via a weighing cell (22) which is operatively connected to the tank (08) and/or detects the weight of the tank (08).

## Revendications

1. Procédé de faire fonctionner un dispositif de préparation de boissons (01), notamment une machine à café entièrement automatique, avec un module de mousse (20) comprenant un mode mousse, le mode mousse comprenant les étapes de procédé consistant à :
- faire couler un fluide d'entraînement au travers d'une membrane (10) du module de mousse (20) à partir d'une première surface de membrane à une deuxième surface de membrane de la membrane (10), la membrane (10) étant de préférence poreuse ;
- faire couler un fluide à mousser, qui contient de préférence des protéines, au travers d'une chambre de fluide dans laquelle la deuxième surface de membrane de la membrane (10) est disposée, le fluide à mousser étant refoulé par une pompe d'alimentation (15), notamment une pompe à galets, liée à une ligne d'alimentation (07) reliant un réservoir (08), de préférence un réservoir de lait, et la chambre de fluide,
**caractérisé en ce que**,
avant la fin du mode mousse, la ligne d'alimentation (07) est soumise au fluide d'entraînement et la ligne d'alimentation (07) est ventilée.

2. Procédé selon la revendication 1,
**caractérisé en ce que**,
avant la fin du mode mousse, une direction de refoulement de la pompe d'alimentation (15), de préférence de la pompe à galets, est inversée et du fluide à mousser résiduel est refoulé dans la direction du réservoir (08).

3. Procédé selon l'une quelconque des revendications précédentes,
**caractérisé en ce que**,
avant la fin du mode mousse, la ligne d'alimentation (07) est soumise à un fluide de purge, le fluide de purge étant de préférence refoulé au travers de la ligne d'alimentation (07) et de la chambre de fluide à l'aide d'une pompe à eau d'appoint.

4. Procédé selon l'une quelconque des revendications précédentes,
**caractérisé en ce que**
le fluide d'entraînement est fourni par une pompe (12), de préférence une pompe à air, et la pompe (12) est actionnée en fonction de la mousse à produire.

5. Procédé selon l'une quelconque des revendications précédentes,
**caractérisé en ce que**
le fluide d'entraînement est fourni par une pompe (12), de préférence une pompe à air, et la pompe est commandée par une boucle fermée en mesurant le débit de fluide du fluide d'entraînement fourni au moyen d'un débitmètre pour fluide (21), notamment un débitmètre pour air, et commandant la pompe (12) en fonction d'un débit de fluide cible prédéfini et du débit de fluide déterminé par le débitmètre pour fluide (21).

6. Procédé selon la revendication 4 ou 5,
**caractérisé en ce que**,
en mode mousse, la pompe (12) est actionnée avec un débit de fluide d'entraînement cible prédéterminé qui est variable sur le temps afin d'établir un profile de fluide d'entraînement.

7. Procédé selon l'une quelconque des revendications précédentes,
**caractérisé en ce que**
la pompe d'alimentation (15), de préférence la pompe à galets, est actionnée en fonction de la mousse à produire.

8. Procédé selon la revendication 7,
**caractérisé en ce que**,
en mode mousse, la pompe d'alimentation (15), de préférence la pompe à galets, est actionnée avec un débit de fluide, notamment de lait, à mousser cible prédéterminé qui est variable sur le temps afin d'établir un profile de fluide, de préférence un profile de lait.

9. Procédé selon l'une quelconque des revendications précédentes,
**caractérisé en ce que**,
en mode mousse, le fluide à mousser est chauffé, de préférence selon un profile de chauffage prédéterminé, au moyen d'un dispositif de chauffage en aval de la pompe d'alimentation (15).

10. Procédé selon l'une quelconque des revendications précédentes,
**caractérisé en ce que**
la quantité et/ou la masse du fluide, de préférence du lait, à mousser fourni est déterminée à l'aide d'une cellule de pesage (22) qui est liée fonctionnellement au réservoir (08) et/ou détecte le poids du réservoir (08).
